# EUROPEAN PATENT APPLICATION

(11) **EP 3 327 577 A1**
(43) Date of publication of application: **30.05.2018**
(21) Application number: 16830121.6
(22) Date of filing: 28.04.2016
(51) Int. Cl.: G06F 13/00, G06F 17/30

(54) **INFORMATION PROCESSING DEVICE, INFORMATION PROCESSING METHOD AND PROGRAM**

(30) Priority: 24.07.2015 JP 2015146252
(71) Applicant: Sony Corporation, Tokyo 108-0075 (JP)
(72) Inventor: KANO, Ritsuko, Tokyo 108-0075 (JP); HIROSE, Yukiyoshi, Tokyo 108-0075 (JP)
(74) Representative: MFG Patentanwälte Meyer-Wildhagen Meggle-Freund Gerhard PartG mbB
(86) International application number: PCT/JP2016/063480
(87) International publication number: WO 2017/018016

(57) **Abstract**

[Object] To provide an information processing device, an information processing method, and a program that can tally intentions of conversation participating members on the basis of an input conversation content.

[Solution] An information processing device including: a tally unit configured to tally intentions of respective conversation participating members regarding acceptance or denial on a basis of a predetermined word included in an input conversation content; and an output control unit configured to perform control to output a tally result of the tally unit.

## Description

### Technical Field

The present disclosure relates to an information processing device, an information processing method, and a program.

### Background Art

Communication services that use the Internet are actively used today. E-mail communication among a plurality of people or the use of Internet bulletin boards has already allowed a plurality of people to make decisions. However, the use of group chats, short message services in groups, or the like makes it possible to carry out conversations more in real time, and can frequently bring about situations in which a large number of comments are posted from a large number of people in a short time.

Examples of techniques of summarizing message groups include the following technology. Specifically, for example, Patent Literature 1 describes a technique of extracting, from text information, a topic group for presentation which matches a pattern that represents a topic for presentation. Further, Patent Literature 2 describes that a text summary of a thread is presented to allow a user to quickly understand the significance or relevance of the thread.

### Citation List

### Patent Literature

Patent Literature 1: JP 2007-304872A
Patent Literature 2: JP 2014-524089T

### Disclosure of Invention

### Technical Problem

However, the technique described in Patent Literature 1 can extract a topic from text information, but fails to extract the intentions of the overall conversations which are based on the context of the conversations. Meanwhile, the technique described in Patent Literature 2 fails to present the intention of a conversation participating member at the present time which is based on the context of conversations.

In a situation in which a plurality of people belonging to a group carry out conversations in real time and a large number of people post a large number of comments in a short time in a communication service that uses a network, comments pile up in a short time while people are not participating in the conversations. It is difficult to grasp the overall intentions. Further, if input conversations are displayed one after another in chronological order, important comments are concealed.

Accordingly, the present disclosure proposes an information processing device, an information processing method, and a program that can tally intentions of conversation participating members on the basis of an input conversation content.

### Solution to Problem

According to the present disclosure, there is proposed an information processing device including: a tally unit configured to tally intentions of respective conversation participating members regarding acceptance or denial on a basis of a predetermined word included in an input conversation content; and an output control unit configured to perform control to output a tally result of the tally unit.

According to the present disclosure, there is proposed an information processing method including, by a processor: tallying intentions of respective conversation participating members regarding acceptance or denial on a basis of a predetermined word included in an input conversation content; and performing control to output a tally result of the tally processing.

According to the present disclosure, there is proposed a program for causing a computer to function as: a tally unit configured to tally intentions of respective conversation participating members regarding acceptance or denial on a basis of a predetermined word included in an input conversation content; and an output control unit configured to perform control to output a tally result of the tally unit.

### Advantageous Effects of Invention

As described above, according to the present disclosure, it is possible to tally intentions of conversation participating members on the basis of an input conversation content.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an overall configuration of an information processing system according to an embodiment of the present disclosure.
[FIG. 2] FIG. 2 is a block diagram illustrating an example of a configuration of a server according to the present embodiment.
[FIG. 3] FIG. 3 is a flowchart illustrating tally processing according to the present embodiment.
[FIG. 4] FIG. 4 is a flowchart illustrating display processing according to the present embodiment.
[FIG. 5] FIG. 5 is a diagram illustrating an example of a display screen of a tally result according to the present embodiment.
[FIG. 6] FIG. 6 is a diagram illustrating the tally result according to the present embodiment in a form of a graph.
[FIG. 7] FIG. 7 is a diagram illustrating an example in which the tally result according to the present embodiment is displayed on a same screen as a screen on which a thread of e-mail is displayed.
[FIG. 8] FIG. 8 is a flowchart illustrating decision registration processing according to the present embodiment.
[FIG. 9] FIG. 9 is a diagram illustrating an example of a display screen of a decision according to the present embodiment.
[FIG. 10] FIG. 10 is a diagram illustrating a screen display example according to an application 1 of the present embodiment for distributing a reminder.
[FIG. 11] FIG. 11 is a flowchart illustrating tally processing according to an application 2 of the present embodiment over a plurality of APs.
[FIG. 12] FIG. 12 is a diagram illustrating a display screen example according to an application 3 of the present embodiment when a decision is used on a day of an event.
[FIG. 13] FIG. 13 is a diagram illustrating a display screen example of a tally result when image tally processing according to an application 4 of the present embodiment is performed.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

The description will be made now in the following order.
1. Overview of Information Processing System according to Embodiment of the Present Disclosure
2. Configuration Example
3. Operation Processing Examples
3-1. Tally Processing
3-2. Display Processing
3-3. Decision Processing
4. Applications
4-1. Reminding
4-2.Tally Processing Over Plurality of APs
4-3.Use of Decision on Day of Event
4-4. Image Tally Processing
5. Conclusion

### <<1. Overview of Information Processing System according to Embodiment of the Present Disclosure»

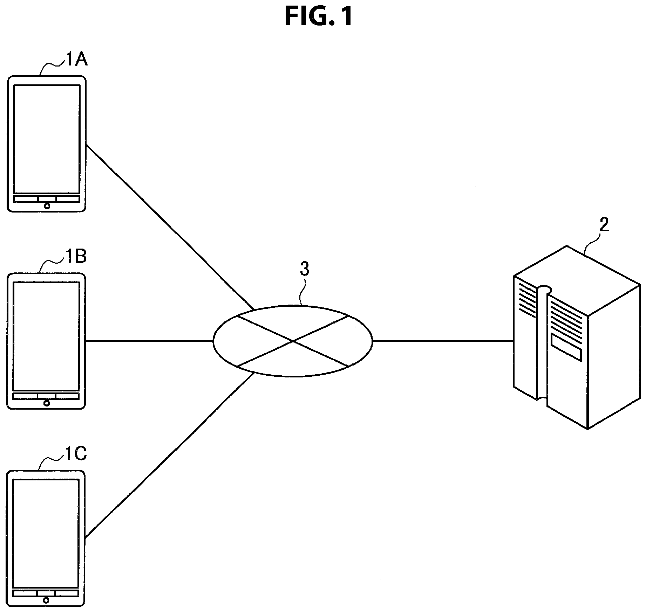

First, an information processing system according to an embodiment of the present disclosure will be described with reference to FIG. 1. FIG. 1 is a diagram illustrating the overall configuration of an information processing system according to an embodiment of the present disclosure. As illustrated in FIG. 1, the information processing system according to the present embodiment includes a plurality of user terminals 1 (1A, 1B, and 1C) and a server 2 (example of an information processing device). The user terminals 1 are connected, for example, via a network 3. The user terminals 1 are not limited to the smartphones illustrated in FIG. 1, but may also be mobile phone terminals, tablet terminals, notebook personal computers (PCs), various wearable terminals (such as smart glasses, smart watches, smart bands, or smart necklaces), or the like.

A plurality of users can use the respective user terminals 1 (1A, 1B, and 1C) to use a communication service via the network 3. As an example of the communication service, for example, an e-mail service, a group chat service, a short message service in a group, a social networking service in a group, and the like are assumed. These communication services may be provided by the server 2 or another dedicated server (not illustrated).

In the case where a plurality of users use such a communication service described above via the network 3, conversations are carried out more in real time and a large number of comments are posted from a large number of people in a short time. Accordingly, if people do not check conversations for a while or people participate in conversations in the middle, it is difficult to grasp the topics. Further, it is also difficult in some cases to grasp the situation or context of conversations, or the intent or intentions of the overall group members. Especially, in the case where input conversations are displayed one after another in chronological order, important comments are concealed and it takes time to search for the important comments. For example, in the case where a plan to go for dinner is made, most of the people participating in a group chat show the intentions of agreeing to a certain proposal, and a user participates in the chat in the middle, it is necessary to look back through and check individual comments such as "I agree, too" and "I can go on that day" to learn the overall intentions.

Here, the server 2 according to the present embodiment analyzes a conversation content input by each user in the communication service carried out via the network 3, tallies the intentions of the overall participating members, and presents a tally result such as "90% of the members agree. 10% of the members have not yet replied." to a user. This allows the user to easily grasp the overall intentions even in the case where the user does not check the conversations for a while or participates in the conversations in the middle. Further, the server 2 can also present the tally result to a user along with a topic or a summary of a topic extracted by analyzing input conversation contents.

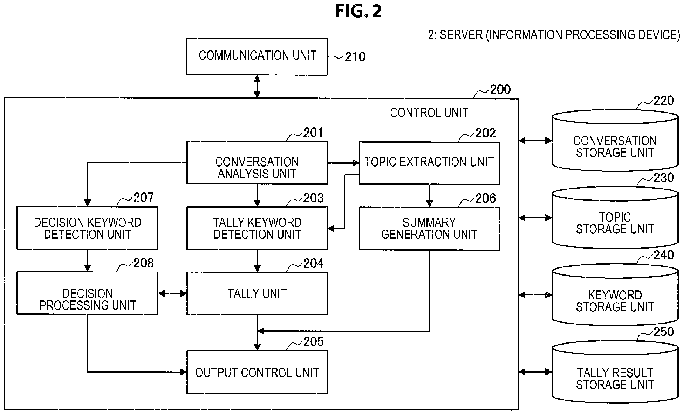

In this way, the information processing system according to the present embodiment makes it possible to tally the intentions of conversation participating members on the basis of input conversation contents. The following specifically describes a configuration example of the server 2 included in the information processing system with reference to FIG. 2.

### «2. Configuration Example»

FIG. 2 is a block diagram illustrating an example of the configuration of the server 2 according to the present embodiment. As illustrated in FIG. 2, the server 2 includes a control unit 200, a communication unit 210, a conversation storage unit 220, a topic storage unit 230, a keyword storage unit 240, and a tally result storage unit 250. Additionally, the server 2 is an example of the information processing device according to the present disclosure.

### (Control Unit 200)

The control unit 200 functions as an operation processing device and a control device, and controls the overall operation of the server 2 in accordance with a variety of programs. The control unit 200 is implemented as an electronic circuit such as a central processing unit (CPU) and a microprocessor. Further, the control unit 200 may include a read only memory (ROM) that stores a program, an operation parameter and the like to be used, and a random access memory (RAM) that temporarily stores a parameter and the like varying as appropriate.

Further, the control unit 200 according to the present embodiment functions, as illustrated in FIG. 2, a conversation analysis unit 201, a topic extraction unit 202, a tally keyword detection unit 203, a tally unit 204, an output control unit 205, a summary generation unit 206, a decision keyword detection unit 207, and a decision processing unit 208.

The conversation analysis unit 201 has a function of analyzing information (conversation contents here, and, for example, text or sound is assumed) input from the user terminals 1. Specifically, the conversation analysis unit 201 carries out a morphological analysis on text (character string obtained by converting sound into text in the case of sound inputs) that is, for example, based on input information, and acquires a word or/and an idiom as an analysis result.

The input information to be analyzed by the conversation analysis unit 201 is conversation contents in communication performed among a plurality of people via the network 3, and text or sound is assumed as described above. Further, the conversation analysis unit 201 analyzes, in real time, a conversation content received by the communication unit 210. The conversation analysis unit 201 may directly receive conversation contents in communication performed among a plurality of people via the network 3 with the communication unit 210 from the user terminals 1 via the network 3, or may receive them from a dedicated server that provides the communication service. Further, in the case where the control unit 200 of the server 2 also has a function of providing a communication service such as e-mail, a chat, an SMS or an electronic bulletin board, the conversation analysis unit 201 may acquire them from a communication execution unit (not illustrated) that executes this function.

The topic extraction unit 202 extracts a topic from words or/and idioms acquired as an analysis result of the conversation analysis unit 201. The extracted topic is stored in the topic storage unit 230. The method for extracting a topic is not limited in particular. However, a topic is extracted, for example, on the basis of a semantic analysis result of a character string including a topic word (topic keyword) registered in advance in the keyword storage unit 240, a sematic analysis result of a character string including a fairly frequent keyword, or the like.

The tally keyword detection unit 203 detects a word or/and an idiom that is the same as or/and similar to a tally keyword serving as a tally target from the words or/and idioms acquired as an analysis result of the conversation analysis unit 201. The tally keyword serving as a tally target is a keyword for tallying the intentions of conversation participating members regarding acceptance or denial. Examples of the tally keyword serving as a tally target include what is related to participation, nonparticipation, agreement, disagreement, or undecidedness. Such a tally keyword is registered in advance in the keyword storage unit 240. Further, the tally keyword detection unit 203 may also select a tally keyword serving as a tally target from the tally keywords registered in advance in the keyword storage unit 240 in accordance with a topic extracted by the topic extraction unit 202. For example, when topics about events, trips, and the like are extracted, the tally keyword detection unit 203 selects a tally keyword related to participation/nonparticipation. When topics for asking for opinions, discussing, and the like are extracted, the tally keyword detection unit 203 selects a tally keyword related to agreement/disagreement.

The tally unit 204 tallies the intentions of conversation participating members regarding acceptance or denial on the basis of a tally keyword detected by the tally keyword detection unit 203. A tally result is stored in the tally result storage unit 250.

For example, the tally unit 204 calculates the number of participants, nonparticipants, people who agree, people who disagree, people who remain undecided, or people who have not yet replied. In the case where the same users make a plurality of replies, the tally unit 204 may also tally the intentions on the basis of only the latest input information. Further, in the case where the tally keyword detection unit 203 detects a reply indicating that one user represents a plurality of people, the tally unit 204 takes it into consideration to tally the intention. For example, in the case where tally keywords such as "family of four" and "participate" are detected from input information such as "we, a family of four, will participate," the tally unit 204 tallies the intention as four participants. The tally timing of the tally unit 204 is not limited in particular. For example, the tally unit 204 may constantly tally intentions, the tally unit 204 may tally intentions every fixed time, the tally unit 204 may tally intentions whenever a conversation is input, the tally unit 204 may tally intentions in accordance with a request from a user, or the tally unit 204 may tally intentions in accordance with the output timing of the output control unit 205.

The output control unit 205 performs control to output tally results tallied by the tally unit 204 to the user terminals 1. Specifically, the output control unit 205 performs control to generate screen generation information for displaying the tally result on the display screens of the user terminals 1, and transmit the screen generation information to the user terminals 1 from the communication unit 210 via the network 3. The tally result can be displayed, for example, as text or/and a chart. Further, the tally result can be displayed on the same screens as the screens on which conversation contents of the conversation participating members are displayed in the display screens of the user terminals 1. Further, the output timing of the output control unit 205 at which the tally result is output to the user terminals 1 is not limited in particular. For example, the output control unit 205 performs control to output a tally result up to the present time when a user makes a request, when a user displays conversation contents of the conversation participating members which are input in the user terminals 1, or when no conversations are input for a fixed time.

Moreover, the output control unit 205 can also perform control to output a tally result to the user terminals 1 along with a summary generated by the summary generation unit 206 described below.

Further, the output control unit 205 performs control to output a tally result decided and registered by the decision processing unit 208 as a decision on the basis of a word related to decision which is detected by the decision keyword detection unit 207 from an analysis result of an input conversation content. Further, the output control unit 205 may perform control to notify all the participating members (user terminals 1A to 1C) of the decision at the time of decision and registration.

The summary generation unit 206 has a function of generating a summary on the basis of a topic extracted by the topic extraction unit 202. The method for generating a summary is not limited in particular. For example, the summary generation unit 206 uses a character string including a word related to the extracted topic or couples words related to the topic to each other to generate a summary (text).

The decision keyword detection unit 207 detects a word or/and an idiom that is the same as or/and similar to a decision keyword serving to trigger decision processing from words or/and idioms acquired as an analysis result of the conversation analysis unit 201. The decision keyword is a keyword that means decision-making such as "decide," "settle," "OK," "good," "great," "leave it to you," and "let's do it." Such a decision keyword is registered in advance in the keyword storage unit 240.

The decision processing unit 208 has a function of registering a tally result as a decision. The tally result is obtained by tallying the intentions of conversation participating members. In the case where the decision keyword detection unit 207 detects a decision keyword (moreover, a decision-making keyword is detected from the conversations of all the participating members but at least a proposer (user who inputs a conversation such as "Is this okay?"), the decision processing unit 208 performs decision processing. Alternatively, in the case where a reply deadline acquired from an analysis result of the input conversations goes by (or no reply is acquired within a fixed time after a reminder as described below), the decision processing unit 208 may perform decision processing at that time.

Specifically, the decision processing unit 208 upgrades and registers, as a decision, a tally result (or the most recent tally result) tallied on the basis of a keyword that is, for example, positioned before or after a decision keyword included in the conversation contents and represents a place, time, or the number of people. The processing of registering a decision may be performed, for example, by setting a decision flag to a tally result stored in the tally result storage unit 250.

### (Communication Unit 210)

The communication unit 210 is a communication module for transmitting and receiving data to and from another device in a wired/wireless manner. For example, the communication unit 210 connects to the user terminals 1 (1A, 1B, and 1C) via the network 3, and transmits and receives data.

### (Conversation Storage Unit 220)

The conversation storage unit 220 stores conversation contents (text, sound, images, or sound/images converted into text) received via the communication unit 210 in communication performed among a plurality of users via the network 3. Converting images into text means converting a text image into a character string, for example, on the basis of an image analysis result, or converting the meaning of an illustration into a character string.

### (Topic Storage Unit 230)

The topic storage unit 230 stores a topic extracted by the topic extraction unit 202, or a summary generated by the summary generation unit 206.

### (Keyword Storage Unit 240)

The keyword storage unit 240 stores a tally keyword and a decision keyword used for tally processing and decision processing. Further, each keyword may be associated with the type of topic.

### (Tally Result Storage Unit 250)

The tally result storage unit 250 stores a tally result of the tally unit 204. Further, the tally result storage unit 250 may set a decision flag to a tally result output by the output control unit 205 as a decision.

The configuration of the server 2 according to the present embodiment has been specifically described above. Next, the operation processing of the information processing system according to the present embodiment will be specifically described.

### «3. Operation Processing Examples»

Here, as an example, a guide to an event or the like (example of a topic) is extracted from the conversations that are input into the user terminals 1 through an input means for any of text, sound, and the like, and carried out among a plurality of users registered in a group, and a tally result of the conversations is presented.

### <3-1. Tally Processing>

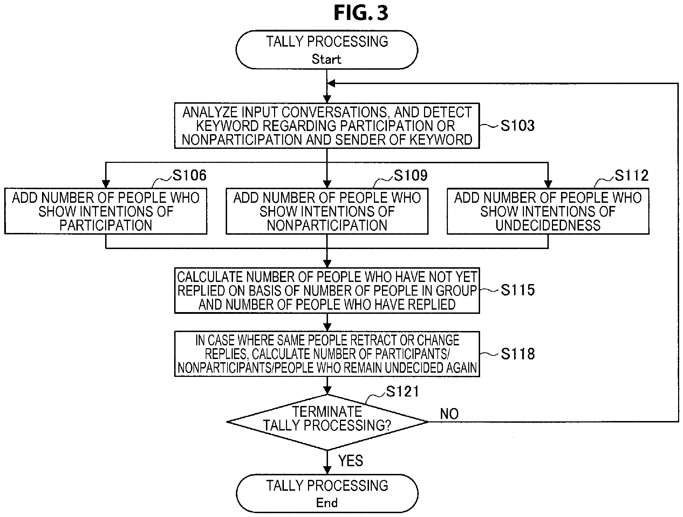

First, tally processing according to the present embodiment will be described with reference to FIG. 3. FIG. 3 is a flowchart illustrating the tally processing according to the present embodiment.

As illustrated in FIG. 3, the control unit 200 of the server 2 first analyzes input conversations with the conversation analysis unit 201, and detects a keyword (tally keyword) regarding participation or nonparticipation and a sender of the keyword with the tally keyword detection unit 203 (step S103).

Next, control unit 200 uses the tally unit 204 to add the number of people who show the intentions of participation (step S106), the number of people who show the intentions of nonparticipation (step S109), or the number of people who show the intentions of undecidedness (step S112) on the basis of the tally keyword detected by the tally keyword detection unit 203.

The control unit 200 then calculates the number of people who have not yet replied with the tally unit 204 on the basis of the number of people in the group and the number of people who have replied (step S115).

Next, in the case where the same people retract or change the replies, the control unit 200 calculates the number of participants/nonparticipants/people who remain undecided again with the tally unit 204 (step S118).

The control unit 200 then repeats steps S103 to S121 above until the tally processing terminates (step S121).

### <3-2. Display Processing>

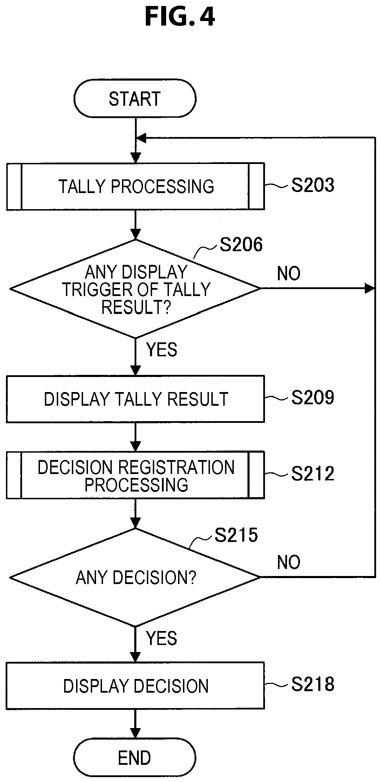

Next, display processing of visualizing results tallied through the tally processing, and presenting the results to a user will be described with reference to FIG. 4. FIG. 4 is a flowchart illustrating the display processing according to the present embodiment.

As illustrated in FIG. 4, the control unit 200 first performs the tally processing described above with reference to FIG. 3 (step S203).

Next, the control unit 200 determines whether there is a display trigger of a tally result (step S206). As the display trigger of a tally result, for example, the case where a user makes a request (e.g., case where "tally" is input), the case where a user opens a thread (i.e., case where a screen on which conversation contents are displayed is opened in the user terminals 1), the case where a predetermined time elapses from the final conversation, or the like is assumed.

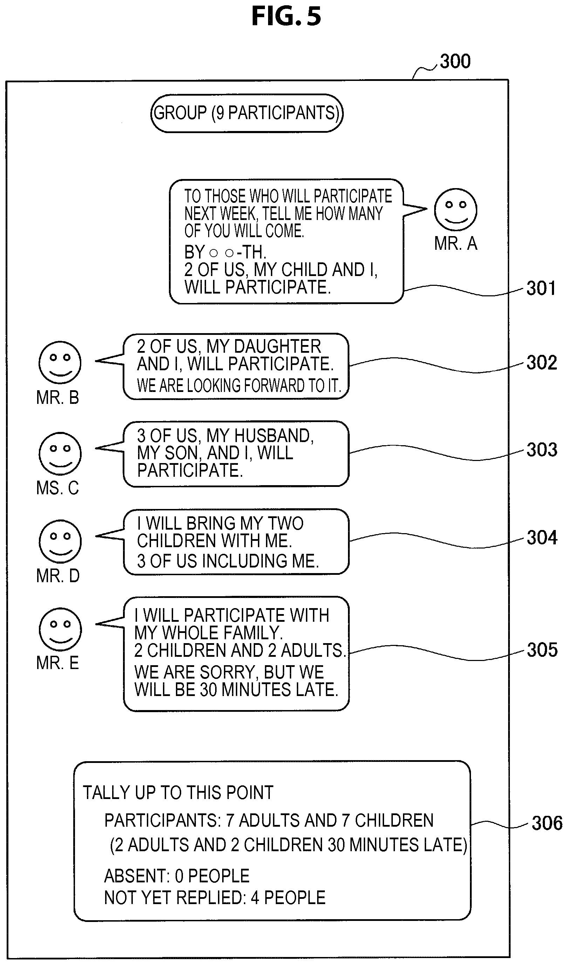

The control unit 200 then performs control with the output control unit 205 to cause the user terminals 1 to display the tally result (i.e., pending tally result in the middle) at the present time (step S209). At this time, the output control unit 205 may display the tally result on the display screens of the user terminals 1 after the final conversation. Further, the output control unit 205 may also display the tally result as text or a chart. The following demonstrates display screen examples in which such a tally result is displayed on the same screen as the screen on which conversation contents are displayed in FIGS. 5 to 7.

FIG. 5 is a diagram illustrating an example of a display screen of a tally result according to the present embodiment. In the illustrated example, a screen 300 displays conversation contents (texts 301, 302, 303, 304, and 305) of group members, and a tally result 306. The tally result 306 includes the number of participants (further including the details of the participants (adults, children, and the like) and notes (lateness information and the like)), the number of absentees, and the number of people who have not yet replied as a tally result up to this point. In the case where there is a person who remains undecided about the reply, the number of people who remain undecided is also included. In the case where conversation contents are displayed one after another in chronological order, the tally result 306 is displayed after the final conversation (text 305, here) as the latest information.

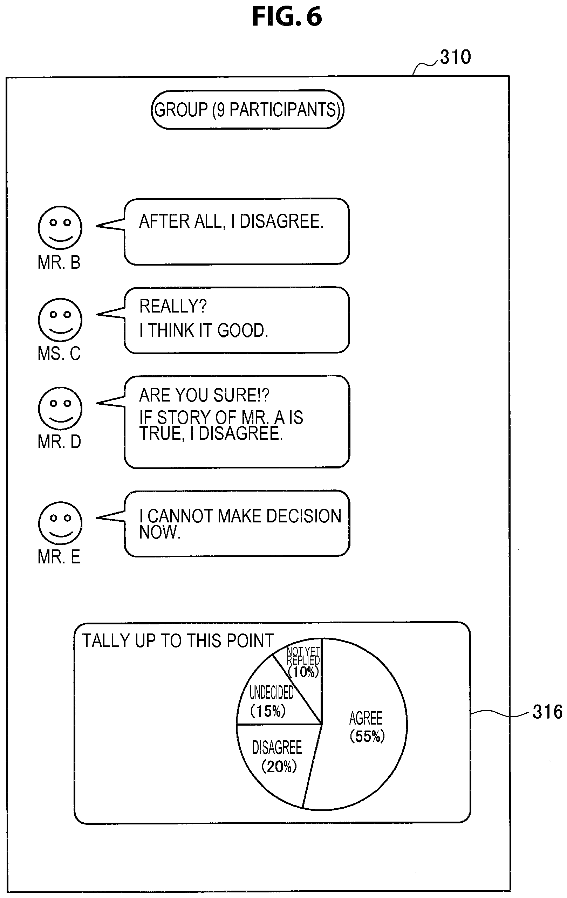

FIG. 6 is a diagram illustrating a tally result according to the present embodiment in the form of a graph. In the illustrated example, a screen 310 displays conversation contents of group members and a tally result 316. The tally result 316 is displayed as a graph that illustrates the tally result in percentage terms. In this way, displaying the tally result as a graph allows a user to intuitively grasp the current context or intentions (the majority favors agreement or disagreement, etc.) of the overall conversations.

Additionally, the mode for displaying a tally result is not limited to the above-described example. For example, a tally result may be displayed as a pop-up, or displayed in another display area different from a display area in which conversation contents are displayed.

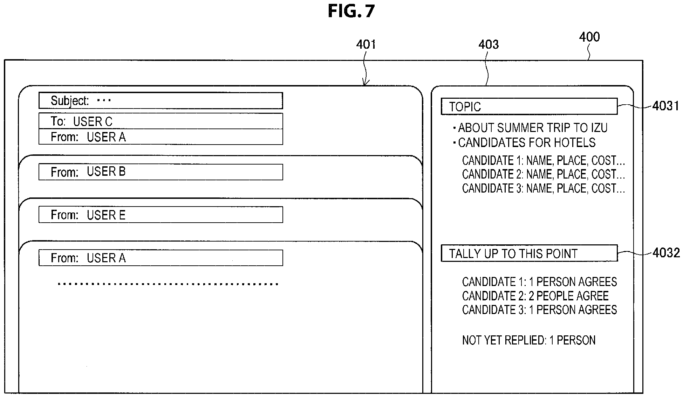

FIG. 7 is a diagram illustrating an example in which a tally result according to the present embodiment is displayed on the same screen as the screen on which threads of e-mail are displayed. In the illustrated example, a screen 400 displays threads 401 of e-mail, and a tally result 403. The tally result 403 includes a summary 4031 of an extracted topic, and a detailed tally result 4032. The summary 4031 of the topic includes information such as "summer trip to Izu," "candidates for hotels," and "candidate 1, candidate 2, candidate 3" as a guide to an event. Further, the detailed tally result 4032 includes the number of people who agree to/disagree with each candidate, the number of people who have not yet replied, and the number pf people who remain undecided. This allows a user to immediately grasp topics, the contents of conversations, context, and the intentions of conversation members by viewing the tally result 403 without checking all the contents of the threads 401.

Further, the tally result according to the present embodiment does not have to be displayed on a display screen alone, but may also be reported as sound from the speakers of the user terminals 1. Further, the percentage or the number of people does not necessarily have to be shown with accuracy. The overall intentions may be roughly grasped. For example, the control unit 200 can also show the overall intentions with expressions such as "The following is the current tally status. Most of the people show the intentions of participation. Two absentees are Mr. A and Mr. B."

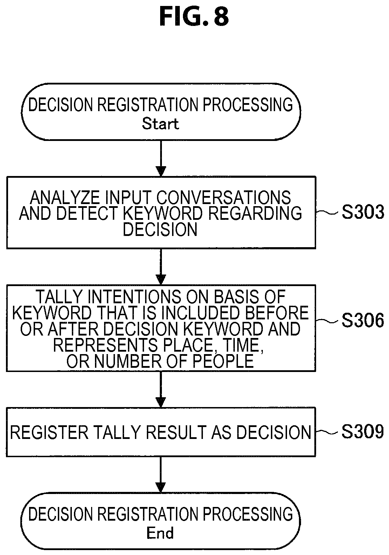

Next, the control unit 200 performs decision registration processing (step S212). The details of the decision registration processing will be described below with reference to FIG. 8.

Next, in the case where there is a decision (step S215/Yes), the control unit 200 performs control with the output control unit 205 to display the decision on the user terminals 1 (step S218). In contrast, in the case where there is no decision (step S215/No), steps S203 to S212 above are repeated.

### <3-3. Decision Process>

Next, the decision registration processing of a tally result described above in step S212 will be described with reference to FIG. 8. FIG. 8 is a flowchart illustrating the decision registration processing according to the present embodiment.

As illustrated in FIG. 8, the control unit 200 first analyzes input conversations with the conversation analysis unit 201, and detects a keyword (decision keyword) regarding a tally decision with the decision keyword detection unit 207 (step S303).

Next, the control unit 200 requests the tally unit 204 with the decision processing unit 208 to tally intentions on the basis of a keyword that is included before or after the decision keyword and represents a place, time, or the number of people, and acquires the latest tally results tallied by the tally unit (step S306).

The control unit 200 then registers the latest tally result with the decision processing unit 208 as a decision (step S309).

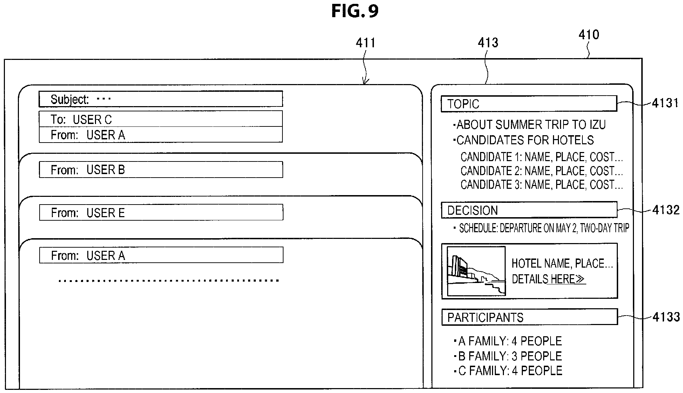

The decision process according to the present embodiment has been specifically described above. The decision registered in this way is displayed on the user terminals 1 in step S218 above. Here, a display example of a decision is displayed will be described with reference to FIG. 9.

FIG. 9 is a diagram illustrating an example of a display screen of a decision according to the present embodiment. In the illustrated example, a screen 410 displays threads 410 of e-mail, and a tally result 413. The tally result 413 includes a summary 4131 of an extracted topic, a decision 4132, and a participant detail 4133. The summary 4131 of the topic is similar to the summary 4031 described with reference to FIG. 7. The decision 4132 includes contents such as a schedule, a destination, and the like decided and registered. Further, the link to a web page of the destination may be acquired on the basis of destination information, and displayed along with an image. Further, the details of the participants included in the decision are displayed in another display area of the screen 410 as the participant detail 4133.

Displaying the decision in this way allows a user who does not check conversations for a while to easily grasp the decision.

Further, the output control unit 205 of the server 2 may create a web page like a travel guide that summarizes decisions, and attach the link to the web page to the same screen as the screen on which the threads 410 of e-mail are displayed along with an indication such as "decisions here."

In the example illustrated in FIG. 9, the case where a decision is displayed on the same screen as the screen on which the threads 410 of e-mail are displayed has been described, but the present embodiment is not limited thereto. A decision may be displayed on the screen on which conversation contents in another communication service (an electronic bulletin board, a group SNS, or a group chat) are displayed, or displayed on another screen as a pop-up or the like.

### «4. Applications»

### <4-1. Reminding>

The information processing system according to the present embodiment can not only tally or summarize input conversation contents, but also automatically distribute reminder messages in the case where there are people who have not yet replied or remain undecided. The output control unit 205 may grasp the presence of people who have not yet replied or remain undecided on the basis of a tally result of the tally unit 204, and automatically output reminder messages at the timing corresponding to a word related to the reply deadline detected from an analysis result of the conversation analysis unit 201. Further, the output control unit 205 may output a reminder message based on a word related to the reply deadline detected from an analysis result of the conversation analysis unit 201 in accordance with a user request.

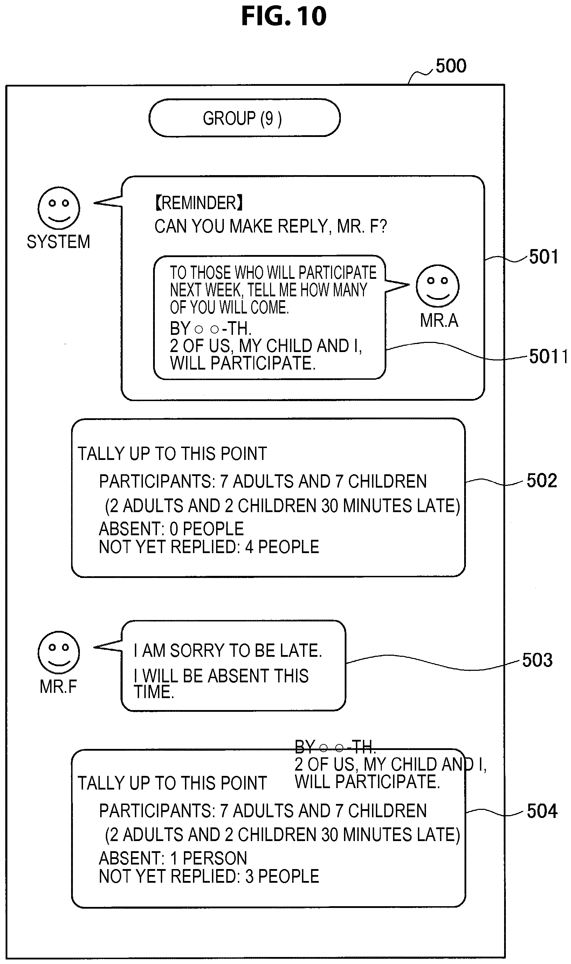

A display example of such a reminder message will be described with reference to FIG. 10.

FIG. 10 is a diagram illustrating a screen display example according to an application 1 of the present embodiment for distributing a reminder. In the illustrated example, a screen 500 displays a reminder 501, a tally result 502, an input conversation content (text 503), and a tally result 504. Even in any case where the reminder 501 is automatically distributed or distributed in accordance with a request, the reminder 501 can elicit a reply without causing any hesitation by making a sender serve as a system as shown in the screen 500.

Further, the reminder 501 may also be displayed on the shared screen on which conversation contents input by conversation participating members are displayed as shown in the screen 500. Further, the reminder 501 includes a conversation content (text 5011) that has appeared before and includes a word related to the reply deadline, and furthermore, the reminder 501 is displayed along with the tally result 502 at the time of reminding. This prevents the original message from being concealed among a large number of comments and prevents you from failing to reply, for example, in the case where your opinion is requested. Further, this makes it possible to reply without looking back through the comments. In addition, if it is displayed along with a conversation that has appeared before and includes the date of the reply deadline indicating whether you are asked to urgently reply to the opinion or can address it later, it is possible to grasp the degree of urgency and appropriately address it.

Further, in the case where a person who has not yet replied makes a reply (text 503), the output control unit 205 may display the tally result 504 tallied again as shown in the screen 500.

The above describes the display example in which a reminder message is distributed onto the shared screen of a group chat on which conversations are displayed one after another in chronological order, but the present application is not limited thereto. For example, a reminder message may also be transmitted by e-mail to a conversation participating member who remains undecided or has not yet replied.

### <4-2.Tally Processing Over Plurality of APs>

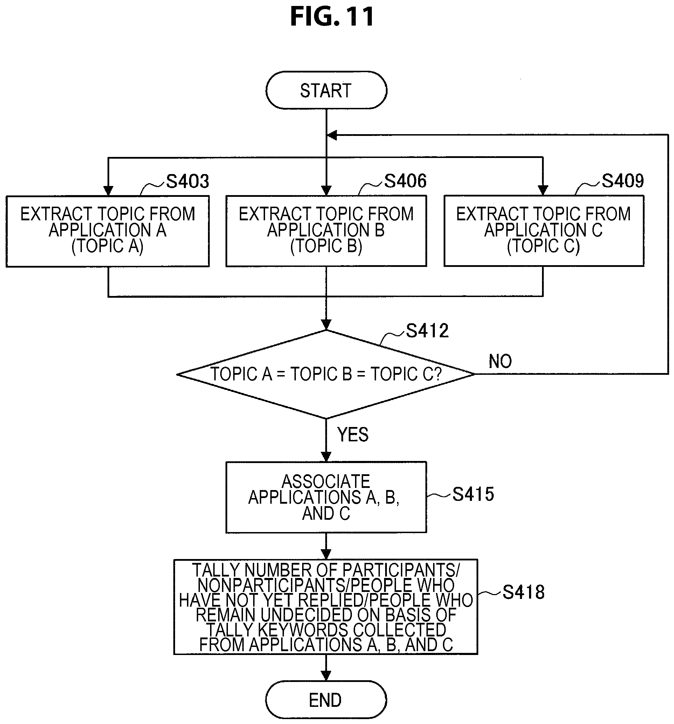

The information processing system according to the present embodiment is not limited to tallying in one communication service (which will also be referred to as application (AP)). In the case where a plurality of users deal with the same topic over a plurality of APs, these can also be tallied together. The following describes such tally processing with reference to FIG. 11.

FIG. 11 is a flowchart illustrating tally processing according to an application 2 of the present embodiment over a plurality of APs. Here, as an example, the case where a plurality of users communicate with each other by using at least any one of an application A (such as an e-mail service), an application B (such as a group chat), and an application C (such as another e-mail service different from the application A) is assumed. That is, the case where a user a uses the application A to communicate with users c and d, the user a and the user b use the application B to communicate with each other, and further, the user b uses the application C to communicate with the users c and e is assumed.

As illustrated in FIG. 11, using the topic extraction unit 202, the control unit 200 first extracts a topic (topic A) from the application A (step S403), extracts a topic (topic B) from the application B (step S406), and extracts a topic (topic C) from the application C (step S409).

Next, the control unit 200 determines whether the extracted topic A, topic B, and topic C are all the same (step S412). Whether the topics are the same can be determined, for example, in accordance with whether the keywords of participating members, dates and time, destinations or the like overlap.

In the case where all of them are the same (step S412/Yes), the control unit 200 then associates the application A, the application B, and the application C (step S415).

Next, the control unit 200 uses the tally keyword detection unit 203 to detect tally keywords from analysis results of the respective conversation contents input into the associated application A, application B, and application C, and uses the tally unit 204 to tally the number of participants/nonparticipants/people who have not yet replied/people who remain undecided (step S418). A tally result may be displayed, for example, on the conversation screen of any one of the applications, or may also be displayed on the respective conversation screens of all the applications.

As described above, when a plurality of users deal with the same topic over a plurality of communication services (applications) in the present application, the users can grasp all tally results without checking the plurality of communication services.

Further, the above-described processing associates a plurality of applications in the case where the same topic is dealt with, but the present application is not limited thereto. For example, in the case where members belonging to a predetermined group communicate for a common topic in applications used by the members, the control unit 200 may associate the applications.

### <4-3.Use of Decision on Day of Event>

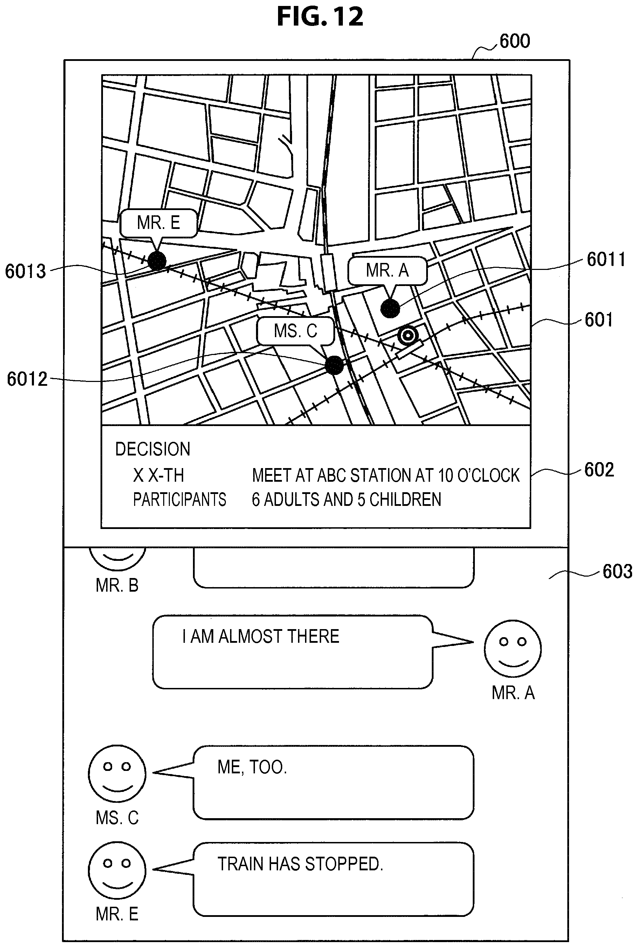

Further, a decision according to the present embodiment can also be used on the day of a decided event. It will be specifically described below with reference to FIG. 12.

FIG. 12 is a diagram illustrating a display screen example according to an application 3 of the present embodiment when a decision is used on a day of an event. In the illustrated example, a screen 600 displays a map image 601, a decision 602, and a conversation screen 603. The map image 601 is a map around the meeting spot included in the decision. Indications 6011, 6012, and 6013 are superimposed on the current positions of members to meet on the map. The current positions are, for example, based on absolute position information acquired by the user terminals 1. This allows the users to intuitively grasp where the members to meet are now.

Further, the decision 602 is displayed in another area different from the conversation screen 603, so that the users no longer have to look back through comments, for example, by scrolling the conversation screen 603 to search for what is decided. The decision 602 includes information such as the date and time, place (meeting spot or destination), and participants of a decided event. This allows the users to intuitively grasp how many people will come to the meeting spot (moreover, who will come in the case where the participating members are also displayed), and significantly improves the convenience.

Further, the conversation screen 603 displays conversations input by group participating members in real time in chronological order.

### <4-4. Image Tally Processing>

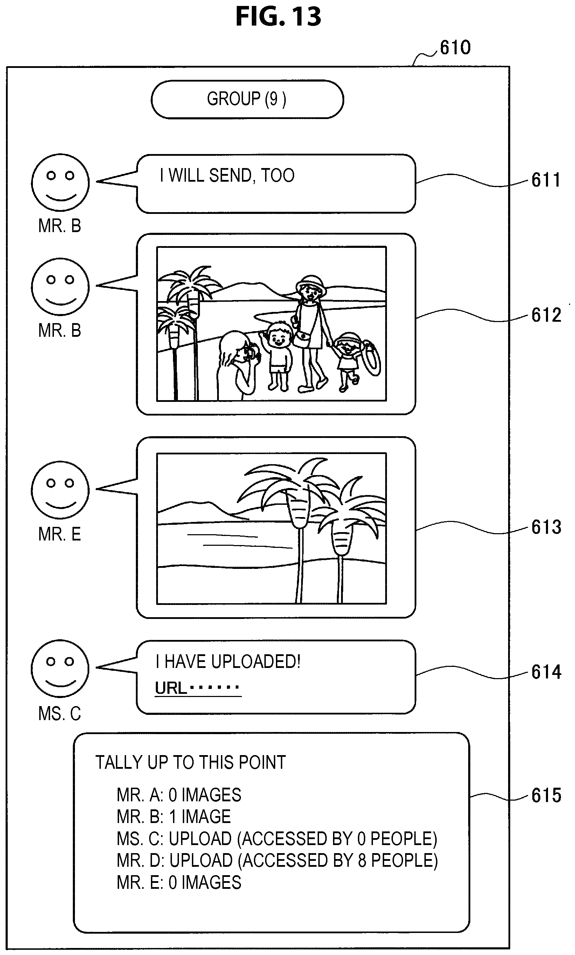

Further, when images are shared (transmitted and received) in a communication service in which a plurality of users carry out conversations, the tally unit 204 according to the present embodiment can tally the images. It will be specifically described below with reference to FIG. 13.

FIG. 13 is a diagram illustrating a display screen example of a tally result when image tally processing according to an application 4 of the present embodiment is performed. In the illustrated example, a screen 610 displays conversation contents (texts 611 and 614, and images 612 and 613), and a tally result 615.

As shown in the screen 610, it is possible to transmit and share images in addition to text between group members, for example, in a group chat. In this case, if people do not check conversations for a while, it is necessary and takes time to scroll back and search to grasp to what degree the images are shared by everyone else. Further, it is also difficult without looking back through and searching conversations to grasp what image excites everyone else. The tally unit 204 can then tally information such as how many images are shared from which members, and further tally, in the case where the URL to which the images are uploaded is input as text, information such as which member uploads, and outputs the information as the tally result 605. The tally result 605 includes the number of people who access the upload destination. This makes it possible to grasp the status of everyone such as which upload destination everyone else views. This further improves the convenience of the communication service.

### «5. Conclusion»

As described above, the information processing system according to an embodiment of the present disclosure makes it possible to tally the intentions of conversation participating members on the basis of input conversation contents.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

It is also possible to make a computer program for causing hardware such as the CPU, the ROM, and the RAM built in the server 2 or the user terminal 1 to implement the function of the server 2 or the user terminal 1. Further, there is also provided a computer-readable storage medium having the computer program stored therein.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   a tally unit configured to tally intentions of respective conversation participating members regarding acceptance or denial on a basis of a predetermined word included in an input conversation content; and
   an output control unit configured to perform control to output a tally result of the tally unit.
(2) The information processing device according to (1), in which
   the tally unit tallies a number of participants, nonparticipants, people who remain undecided, or people who have not yet replied among the respective conversation participating members, on a basis of a word related to participation, nonparticipation, or undecidedness, the word being detected on a basis of an analysis result of an input conversation content.
(3) The information processing device according to (2), in which
   the tally unit tallies a number of participating people on a basis of a word related to a number of participants, the word being detected on a basis of an analysis result of an input conversation content.
(4) The information processing device according to (1), in which
   the tally unit tallies a number of people who agree, people who disagree, people who remain undecided, or people who have not yet replied among the respective conversation participating members, on a basis of a word related to agreement, disagreement, or undecidedness, the word being detected on a basis of an analysis result of an input conversation content.
(5) The information processing device according to any one of (1) to (4), further including:
   a generation unit configured to generate a summary of a topic extracted from a conversation, in which
   the output control unit outputs the generated summary of the topic and the tally result.
(6) The information processing device according to any one of (1) to (5), in which
   the output control unit performs control to output screen generation information for displaying the tally result as a character string or a chart.
(7) The information processing device according to any one of (1) to (6), in which
   when a user makes a request, when a user displays the conversation content, or when no conversation is input within a predetermined time, the output control unit performs control to display a tally result up to present time.
(8) The information processing device according to any one of (1) to (7), in which
   the output control unit performs control to display the tally result on a same screen as a screen on which the conversation content is displayed.
(9) The information processing device according to any one of (1) to (8), in which
   the output control unit performs control to output reminder information at timing corresponding to a word related to a reply deadline detected from an analysis result of an input conversation content.
(10) The information processing device according to any one of (1) to (9), in which
   the output control unit performs control to output reminder information in accordance with a user request, the reminder information being based on a word related to a reply deadline detected from an analysis result of the input conversation content.
(11) The information processing device according to (9) or (10), in which
   the reminder information is displayed on a screen that displays the input conversation content and is sharable and displayable between the respective conversation participating members.
(12) The information processing device according to (9) or (10), in which
   the reminder information is transmitted by mail to a conversation participating member who remains undecided or has not yet replied.
(13) The information processing device according to any one of (9) to (12), in which
   the reminder information includes a conversation content that has appeared and includes the word related to the reply deadline, and a tally result at time of reminding.
(14) The information processing device according to any one of (1) to (13), in which
   the output control unit performs control to output the tally result as a decision on a basis of a word related to decision, the word being detected from an analysis result of an input conversation content.
(15) An information processing method including, by a processor:
   tallying intentions of respective conversation participating members regarding acceptance or denial on a basis of a predetermined word included in an input conversation content; and
   performing control to output a tally result of the tally processing.
(16) A program for causing a computer to function as:
   a tally unit configured to tally intentions of respective conversation participating members regarding acceptance or denial on a basis of a predetermined word included in an input conversation content; and
   an output control unit configured to perform control to output a tally result of the tally unit.

### Reference Signs List

- 1 (1A to 1C): user terminal
- 2: server
- 3: network
- 200: control unit
- 201: conversation analysis unit
- 202: topic extraction unit
- 203: tally keyword detection unit
- 204: tally unit
- 205: output control unit
- 205: tally unit
- 206: summary generation unit
- 207: decision keyword detection unit
- 208: decision processing unit
- 210: communication unit
- 220: conversation storage unit
- 230: topic storage unit
- 240: keyword storage unit
- 250: tally result storage unit
- 300: screen

## Claims

1. An information processing device comprising:
a tally unit configured to tally intentions of respective conversation participating members regarding acceptance or denial on a basis of a predetermined word included in an input conversation content; and
an output control unit configured to perform control to output a tally result of the tally unit.

2. The information processing device according to claim 1, wherein
the tally unit tallies a number of participants, nonparticipants, people who remain undecided, or people who have not yet replied among the respective conversation participating members, on a basis of a word related to participation, nonparticipation, or undecidedness, the word being detected on a basis of an analysis result of an input conversation content.

3. The information processing device according to claim 2, wherein
the tally unit tallies a number of participating people on a basis of a word related to a number of participants, the word being detected on a basis of an analysis result of an input conversation content.

4. The information processing device according to claim 1, wherein
the tally unit tallies a number of people who agree, people who disagree, people who remain undecided, or people who have not yet replied among the respective conversation participating members, on a basis of a word related to agreement, disagreement, or undecidedness, the word being detected on a basis of an analysis result of an input conversation content.

5. The information processing device according to claim 1, further comprising:
a generation unit configured to generate a summary of a topic extracted from a conversation, wherein
the output control unit outputs the generated summary of the topic and the tally result.

6. The information processing device according to claim 1, wherein
the output control unit performs control to output screen generation information for displaying the tally result as a character string or a chart.

7. The information processing device according to claim 1, wherein
when a user makes a request, when a user displays the conversation content, or when no conversation is input within a predetermined time, the output control unit performs control to display a tally result up to present time.

8. The information processing device according to claim 1, wherein
the output control unit performs control to display the tally result on a same screen as a screen on which the conversation content is displayed.

9. The information processing device according to claim 1, wherein
the output control unit performs control to output reminder information at timing corresponding to a word related to a reply deadline detected from an analysis result of an input conversation content.

10. The information processing device according to claim 1, wherein
the output control unit performs control to output reminder information in accordance with a user request, the reminder information being based on a word related to a reply deadline detected from an analysis result of the input conversation content.

11. The information processing device according to claim 9, wherein
the reminder information is displayed on a screen that displays the input conversation content and is sharable and displayable between the respective conversation participating members.

12. The information processing device according to claim 9, wherein
the reminder information is transmitted by mail to a conversation participating member who remains undecided or has not yet replied.

13. The information processing device according to claim 9, wherein
the reminder information includes a conversation content that has appeared and includes the word related to the reply deadline, and a tally result at time of reminding.

14. The information processing device according to claim 1, wherein
the output control unit performs control to output the tally result as a decision on a basis of a word related to decision, the word being detected from an analysis result of an input conversation content.

15. An information processing method comprising, by a processor:
tallying intentions of respective conversation participating members regarding acceptance or denial on a basis of a predetermined word included in an input conversation content; and
performing control to output a tally result of the tally processing.

16. A program for causing a computer to function as:
a tally unit configured to tally intentions of respective conversation participating members regarding acceptance or denial on a basis of a predetermined word included in an input conversation content; and
an output control unit configured to perform control to output a tally result of the tally unit.
